# EUROPEAN PATENT APPLICATION

(11) **EP 4 523 844 A1**
(43) Date of publication of application: **19.03.2025**
(21) Application number: 22941505.4
(22) Date of filing: 06.12.2022
(51) Int. Cl.: B23Q 3/155

(54) **TOOL CHANGING DEVICE FOR MACHINE TOOL, MACHINE TOOL, AND TOOL CHANGING METHOD FOR MACHINE TOOL**

(30) Priority: 13.05.2022 CN 202210523704
(71) Applicant: Kede Numerical Control Co., Ltd., Dalian, Liaoning 116000 (CN)
(72) Inventor: CHEN, Yufeng, Dalian, Liaoning 116000 (CN); REN, Zhihui, Dalian, Liaoning 116000 (CN); HOU, Yanbo, Dalian, Liaoning 116000 (CN); DU, Changlin, Dalian, Liaoning 116000 (CN); SONG, Mingshan, Dalian, Liaoning 116000 (CN); FAN, Chunhong, Dalian, Liaoning 116000 (CN); GUO, Cuijuan, Dalian, Liaoning 116000 (CN); WANG, Lianyang, Dalian, Liaoning 116000 (CN); LI, Yapeng, Dalian, Liaoning 116000 (CN); HE, Xingjian, Dalian, Liaoning 116000 (CN); GONG, Xinglin, Dalian, Liaoning 116000 (CN); BAO, Wenlu, Dalian, Liaoning 116000 (CN)
(74) Representative: JD&P Patent Attorneys Joanna Dargiewicz & Partners
(86) International application number: PCT/CN2022/136823
(87) International publication number: WO 2023/216570

(57) **Abstract**

The present invention discloses a machine tool changer, a machine tool, and a machine tool changing method. The machine tool changer includes: a manipulator; a manipulator mounting arm; a manipulator mounting base; a manipulator rotation driving mechanism; a manipulator swinging driving mechanism; and a manipulator horizontal moving driving mechanism, wherein the manipulator is mounted on the manipulator mounting arm, which is mounted with the manipulator rotation driving mechanism for driving the manipulator to rotate around a horizontal axis, the manipulator mounting arm is mounted on the manipulator mounting arm, which is mounted with a manipulator swinging driving mechanism for driving the manipulator mounting arm to swing around the horizontal axis, and the manipulator mounting base is mounted with the manipulator horizontal moving driving mechanism for driving the manipulator mounting base to move horizontally to make the manipulator approach or move away from a machine tool spindle. The machine tool changer according to the present invention has advantages such as simple structure, short tool changing time, and enhanced machining efficiency of the machine tool.

## Description

### Technical Field

The present invention relates to the technical field of machine tools, particularly a machine tool changer, a machine tool, and a machine tool changing method.

### Background Art

Currently, machine tool change is conducted at fixed tool changing points on both sides of a machine tool. That is, when a machine tool spindle completes the current sequence of machining and undergoes a mechanical tool change, the machine tool spindle needs to move to a fixed tool changing area. There, the manipulator will perform the tool changing operation on the machine tool spindle and the tool magazine. After the tool change, the machine tool spindle moves back to a machining area to machine a workpiece. For machine tools with short travel, the time required for the machine tool spindle to move to the tool changing point and perform the tool change is relatively short, and has less impact on machining efficiency. However, for machine tools with long travel, especially those with travel greater than 3 meters, the time required for the spindle to move from the machining area (especially when the machining area is at the farthest end from the tool magazine) to the tool changing area to perform the tool change and to move back to the machining area is significantly longer, drastically reducing the machining efficiency of the parts that require frequent tool changes.

### Summary of Invention

The present invention solves the above problem by proposing a machine tool changer.

The technical means adopted by the present invention are as follows.

A machine tool changer, including: a manipulator; a manipulator mounting arm; a manipulator mounting base; a manipulator rotation driving mechanism; a manipulator swinging driving mechanism; and a manipulator horizontal moving driving mechanism, wherein
the manipulator is mounted on the manipulator mounting arm, which is mounted with the manipulator rotation driving mechanism for driving the manipulator to rotate around a horizontal axis, the manipulator mounting arm is mounted on the manipulator mounting base, which is mounted with a manipulator swinging driving mechanism for driving the manipulator mounting arm to swing around the horizontal axis, and the manipulator mounting base is mounted with the manipulator horizontal moving driving mechanism for driving the manipulator mounting base to move horizontally to make the manipulator approach or move away from a machine tool spindle.

Further, the manipulator horizontal moving driving mechanism includes a guide rail slider, a rack, a gear, and a first driving motor.

The guide rail slider is mounted on the manipulator mounting base and connected to a guide rail which is arranged on a machine tool bed, and the first driving motor is mounted on the manipulator mounting base and connected to the gear, which meshes with the rack arranged on the machine tool bed.

Further, the manipulator mounting base includes a guide rail slider mounting portion, a first driving motor mounting portion, and a manipulator mounting arm installation portion.

The guide rail slider is mounted on the guide rail slider mounting portion, the first driving motor is mounted on the first driving motor mounting portion, an upper portion of one end of the guide rail slider mounting portion is the manipulator mounting arm installation portion, and the manipulator mounting arm is hinged on the manipulator mounting arm installation portion.

Further, the manipulator mounting arm is hinged on the manipulator mounting base, and the manipulator swinging driving mechanism is a linear driving device with one end hinged to the manipulator mounting arm or the manipulator mounting base and another end fixedly connected to the manipulator mounting base or the manipulator mounting arm.

Further, the manipulator includes a main tool changing claw, a main clamping claw, and a main clamping claw driving mechanism, the main tool changing claw has a tool holder slot, the main clamping claw driving mechanism is arranged at a bayonet end of the tool holder slot on the main tool changing claw, and the main clamping claw is fixed on the main clamping claw driving mechanism, which can drive the main clamping claw to move toward the tool holder slot to clamp or release a tool holder in the tool holder slot.

Further, the manipulator rotation driving mechanism is a second driving motor.

Further, the manipulator mounting base is also mounted with a travel switch.

A machine tool, including: a machine tool bed; a machine tool spindle; a tool magazine; and the machine tool changer according to the present invention, wherein the machine tool spindle is mounted on the machine tool bed, one end of the machine tool bed is provided with the tool magazine, the machine tool changer is mounted on the machine tool bed, and the manipulator horizontal moving driving mechanism can drive the machine tool changer to move horizontally on the machine tool bed to make the manipulator approach or move away from the machine tool spindle.

Further, the guide rail connected to the guide rail slider of the manipulator horizontal moving driving mechanism is identical to the guide rail used for horizontal movement of the machine tool spindle.

A machine tool changing method of the machine tool according to the present invention, including:
when the machine tool spindle machines a workpiece, the manipulator horizontal moving driving mechanism driving the machine tool changer to move to the end of the machine tool bed provided with the tool magazine to move the machine tool changer away from a machining area of the machine tool;
when the machine tool spindle needs a tool change, the machine tool spindle stopping machining, the manipulator rotation driving mechanism driving the manipulator to rotate around the horizontal axis to grip a corresponding tool in the tool magazine, and then, the manipulator horizontal moving driving mechanism driving the machine tool changer to move on the guide rail used for horizontal movement of the machine tool spindle to move the manipulator horizontally to a position of the machine tool spindle;
the manipulator swinging driving mechanism driving the manipulator mounting arm to swing around the horizontal axis toward the machine tool spindle to align the manipulator with the machine tool spindle;
the manipulator rotation driving mechanism driving the manipulator to rotate around the horizontal axis to switch a tool on the manipulator and a tool on the machine tool spindle; and
after switching the tool on the manipulator and the tool on the machine tool spindle, the manipulator swinging driving mechanism driving the manipulator mounting arm to swing around the horizontal axis away from the machine tool spindle, and the manipulator horizontal moving driving mechanism driving the machine tool changer to move to the end of the machine tool bed provided with the tool magazine to move the manipulator away from the machining area of the machine tool spindle.

### Advantageous Effects of Invention

Compared with the prior art, the machine tool changer according to the present invention has the following advantages. The machine tool changer according to the present invention is provided with the manipulator horizontal moving driving mechanism and is arranged on the guide rail which is coaxial with a machine tool slide. The manipulator horizontal moving driving mechanism can drive the manipulator to move horizontally along the machine tool bed, and thus, quick tool changes can be implemented and tool change speed can be improved. Consequently, the machining efficiency of the machine tool is enhanced.

### Brief Description of Drawings

Fig. 1 is a front view of a machine tool changer according to the present invention.
Fig. 2 is a rear view of the machine tool changer according to the present invention.
Fig. 3 is a left side view of the machine tool changer according to the present invention.
Fig. 4 is an axial side view of the machine tool changer according to the present invention.
Fig. 5 is a structural view of a machine tool according to the present invention.

In the drawings: 1. manipulator; 10. main tool changing claw; 11. main clamping claw; 12. main clamping claw driving mechanism; 13. tool holder slot; 2. manipulator mounting arm; 21. mounting arm hinge portion; 22. first mounting arm connecting portion; 23. second mounting arm connecting portion; 24. third mounting arm connecting portion; 25. fourth mounting arm connecting portion; 26. manipulator rotation driving mechanism mounting portion; 27. second driving motor installation cavity; 3. manipulator mounting base; 30. guide rail slider mounting portion; 31. first driving motor mounting portion; 32. manipulator mounting arm installation portion; 4. manipulator rotation driving mechanism; 40. second driving motor; 5. manipulator swinging driving mechanism; 6. manipulator horizontal moving driving mechanism; 60. guide rail slider; 61. rack; 62. gear; 63. first driving motor; 7. travel switch; 80. guide rail; 81. machine tool bed; 82. machine tool spindle; 83. tool magazine; 84. truss; 85. machine tool slide; 9. machine tool changer

### Description of Embodiments

### Embodiment 1

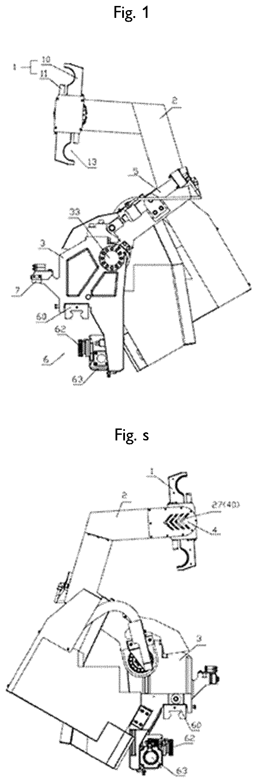

As shown in Figs. 1 to 4, a machine tool changer according to the present invention includes: a manipulator 1; a manipulator mounting arm 2; a manipulator mounting base 3; a manipulator rotation driving mechanism 4; a manipulator swinging driving mechanism 5; and a manipulator horizontal moving driving mechanism 6, wherein
the manipulator 1 is mounted on the manipulator mounting arm 2, which is mounted with the manipulator rotation driving mechanism 4 for driving the manipulator 1 to rotate around a horizontal axis, the manipulator mounting arm 2 is mounted on the manipulator mounting base 3, which is mounted with a manipulator swinging driving mechanism 5 for driving the manipulator mounting arm 2 to swing around the horizontal axis, and the manipulator mounting base 3 is mounted with the manipulator horizontal moving driving mechanism 6 for driving the manipulator mounting base 3 to move horizontally to make the manipulator 1 approach or move away from a machine tool spindle.

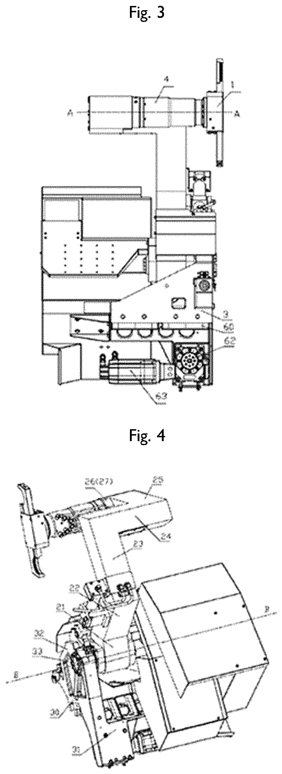

Specifically, as shown in Fig. 4, the manipulator mounting base 3 includes a guide rail slider mounting portion 30, a first driving motor mounting portion 31, and a manipulator mounting arm installation portion 32. In the present embodiment, the guide rail slider mounting portion 30 is a metal plate structure, and the first driving motor mounting portion 31 is arranged on one side of the guide rail slider mounting portion 30 at a certain angle. In the present embodiment, the guide rail slider mounting portion 30 and the first driving motor mounting portion 31 are arranged perpendicularly. An upper portion of one end of the guide rail slider mounting portion 30 extends outward to form the manipulator mounting arm installation portion 32. Preferably, the guide rail slider mounting portion 30, the first driving motor mounting portion 31, and the manipulator mounting arm installation portion 32 are an integrally cast structure. The manipulator mounting base 3 is also provided with structures such as reinforcement ribs and weight-reducing holes to improve strength and reduce weight.

The manipulator horizontal moving driving mechanism 6 is mounted on the manipulator mounting base 3. As shown in Figs. 1 and 2, the manipulator horizontal moving driving mechanism 6 includes a guide rail slider 60, a rack 61, a gear 62, and a first driving motor 63.

The guide rail slider 60 is mounted on the manipulator mounting base 3 and connected to a guide rail 80 which is arranged on a machine tool bed 81, and the first driving motor 63 is mounted on the manipulator mounting base 3 and connected to the gear 62, which meshes with the rack 61 arranged on the machine tool bed 81. In the present embodiment, the first driving motor is a servo motor.

Specifically, the guide rail slider 60 is mounted on a bottom surface of the guide rail slider mounting portion 30. In the present embodiment, there is a plurality of guide rail sliders 60, which are connected to the guide rail 80 arranged on the machine tool bed 81. Preferably, the guide rail on which the guide rail sliders 60 are mounted is identical to the guide rail for horizontal movement of the machine tool spindle, that is, the machine tool changer and a machine tool slide (the machine tool spindle is mounted on the guide rail on the machine tool bed through the machine tool slide) share the same horizontal guide rail. The first driving motor 63 is mounted on the first driving motor mounting portion 31. The first driving motor 63 is connected to the gear 62 through a reducer. In the present embodiment, the first driving motor 63, the reducer, and the gear 62 are located in a space below the guide rail slider 60. The gear 62 meshes with the rack 61 arranged on the machine tool bed 81, and the rack is arranged parallel to the guide rail on the machine tool bed. The first driving motor 63 drives the gear 62 to rotate through the reducer, and the gear meshes with the rack, thereby driving the manipulator mounting base to move horizontally back and forth on the guide rail of the machine tool bed. An upper portion of one end of the manipulator mounting base is the manipulator mounting arm installation portion 32. The manipulator mounting arm 2 is hinged on the manipulator mounting arm installation portion 32, and the manipulator is mounted on the manipulator mounting arm. The horizontal movement of the manipulator mounting base can make the manipulator approach or move away from the machine tool spindle.

As shown in Fig. 4, the manipulator mounting arm 2 includes a mounting arm hinge portion 21, a first mounting arm link portion 22, a second mounting arm link portion 23, a third mounting arm link portion 24, a fourth mounting arm link portion 25, and a manipulator rotation driving mechanism mounting portion 26. The manipulator mounting arm installation portion 32 is mounted with a fixed shaft 33. The mounting arm hinge portion 21 is mounted on the fixed shaft 33 through a bearing. The mounting arm hinge portion 21 is provided with the first mounting arm link portion 22. Another end of the first mounting arm link portion 22 is provided with the second mounting arm link portion 23. The first mounting arm link portion 22 and the second mounting arm link portion 23 are arranged at a certain angle, and the axis of the fixed shaft 33 is perpendicular to the plane formed by the first mounting arm link portion 22 and the second mounting arm link portion 23. Another end of the second mounting arm link portion 23 is provided with the third mounting arm link portion 24. The third mounting arm link portion 24 is arranged parallel to the axial direction of the fixed shaft 33. Another end of the third mounting arm link portion 24 is provided with the fourth mounting arm link portion 25. The fourth mounting arm link portion 25 is parallel to the plane formed by the first mounting arm link portion 22 and the second mounting arm link portion 23. Another end of the fourth mounting arm link portion 25 is the manipulator rotation driving mechanism mounting portion 26. The manipulator mounting arm 2 can be assembled from a plurality of link structures or integrally machined. In the present embodiment, the mounting arm link portions are shell structures with internal cavities to facilitate the arrangement of various electrical or hydraulic pipelines, etc. Meanwhile, the structure of the manipulator mounting arm eliminates the motion interference between the tool magazine and the machine tool spindle during the operation of the machine tool changer.

The manipulator mounting arm 2 is mounted on the fixed shaft 33 on the manipulator mounting base 3 through a bearing. The manipulator swinging driving mechanism 5 is a linear driving device. One end of the linear driving device is hinged to the manipulator mounting arm 2 or the manipulator mounting base 3, and another end is fixedly connected to the manipulator mounting base 3 or the manipulator mounting arm 2. Specifically, in the present embodiment, the linear driving device is a hydraulic cylinder. One end of a piston rod of the hydraulic cylinder is hinged to the manipulator mounting base 3. In the drawing, one end of the piston rod of the hydraulic cylinder is hinged to an upper edge of the manipulator mounting arm installation portion. One end of the body of the hydraulic cylinder is fixedly connected to the manipulator mounting arm through a hydraulic cylinder fixing frame. The movement of the piston rod of the hydraulic cylinder can drive the manipulator mounting arm to swing around the fixed shaft (axis B-B in Fig. 4).

A free end of the fourth mounting arm link portion 25 is the manipulator rotation driving mechanism mounting portion 26. A second driving motor installation cavity 27 is provided in the manipulator rotation driving mechanism mounting portion 26. The second driving motor is mounted in the second driving motor installation cavity. The second driving motor is connected to the manipulator through a reducer to drive the manipulator to rotate around a central axis (axis A-A in Fig. 3). In the present embodiment, the reducer is an RV reducer, and the second driving motor is a servo motor.

The manipulator 1 includes a main tool changing claw 10, a main clamping claw 11, and a main clamping claw driving mechanism 12, the main tool changing claw 10 has a tool holder slot 13, the main clamping claw driving mechanism 12 is arranged at a bayonet end of the tool holder slot 13 on the main tool changing claw 10, and the main clamping claw 11 is fixed on the main clamping claw driving mechanism 12, which can drive the main clamping claw 11 to move toward the tool holder slot 13 to clamp or release a tool holder in the tool holder slot 13. Specifically, the main tool changing claw is provided with a hydraulic cavity close to the bayonet end of the tool holder slot. The hydraulic cavity is connected to a hydraulic pump station through a pipeline. The main clamping claw is a metal plate structure and is arranged in the hydraulic cavity through a travel limit pin. A high-pressure fluid from the hydraulic pump station can drive the main clamping claw to move within the hydraulic cavity to clamp or release the tool holder placed in the tool holder slot 13.

Furthermore, a travel switch 7 is also mounted on the manipulator mounting base 3 to facilitate control and position detection of the machine tool changer. Specifically, by arranging the travel switch, the current position of the manipulator can be obtained in real-time, and the manipulator can be controlled to carry out acceleration and deceleration or uniform speed movement so that the manipulator accurately moves to the current position of the machine tool spindle to implement the tool changing of the machine tool spindle.

For the machine tool changer according to the present invention, the manipulator which changes tools shares a single guide rail with a machine tool slide 85, and thus, the manipulator which changes tools can move horizontally along the machine tool bed quickly and conveniently to perform tool changes for the machine tool spindle. The machine tool changer according to the present invention eliminates the need for the machine tool spindle (machine tool slide) to move horizontally on the machine tool bed to a tool changing area or a machining area during a tool change. Consequently, the machine tool spindle can change tools at any horizontal position within the machining area of the machine tool. Thus, after the tool change, the machine tool spindle can immediately machine a workpiece without requiring any idle travel of the machine tool spindle (machine tool slide), significantly reducing tool change time and improving machining efficiency. Meanwhile, the machine tool spindle no longer requires the machine tool slide to move back and forth during tool changes, thereby reducing wear on the guide rail and slide, and extending the service life of the machine tool. Additionally, the machine tool changer is relatively lightweight, facilitating control and high-speed operation and further enhancing tool change efficiency.

### Embodiment 2

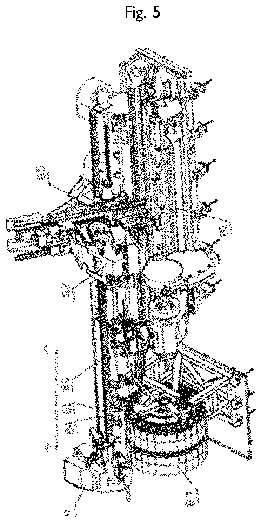

As shown in Fig. 5, the machine tool according to the present invention includes: the machine tool bed 81; a machine tool spindle 82; a tool magazine 83; and the machine tool changer according to the present invention, wherein
the machine tool spindle 82 is mounted on the machine tool bed 81, one end of the machine tool bed 81 is provided with the tool magazine 83, the machine tool changer is mounted on the machine tool bed 81, the manipulator horizontal moving driving mechanism 6 can drive the machine tool changer to move horizontally on the machine tool bed 81 to make the manipulator 1 approach or move away from the machine tool spindle 82.

Specifically, the machine tool spindle assembly is provided on a guide rail arranged horizontally along the machine tool bed and can move horizontally along the guide rail to machine workpieces. One end of the machine tool bed is mounted with the tool magazine. In the present embodiment, the tool magazine is a disc-type tool magazine. A truss 84 is arranged between the machine tool bed and the tool magazine. An extended guide rail docking with the horizontal guide rail on the machine tool bed is provided on the truss. The machine tool changer can move horizontally along the horizontal guide rail on the machine tool bed or the extended guide rail. That is, the guide rail slider of the machine tool changer is mounted on the guide rails. The truss 84 is provided to reduce the length of the machine tool bed, thereby saving material for the machine tool bed and reducing manufacturing costs.

Further, the guide rail 80 connected to the guide rail slider 60 of the manipulator horizontal moving driving mechanism 6 is identical to the guide rail used for horizontal movement of the machine tool spindle 82, further simplifying the structure and facilitating installation and adjustment.

### Embodiment 3

A machine tool changing method of the machine tool according to the present invention, including:
when the machine tool spindle machines a workpiece, the manipulator horizontal moving driving mechanism driving the machine tool changer to move to the end of the machine tool bed provided with the tool magazine to move the machine tool changer away from a machining area of the machine tool;
specifically, before the machine tool spindle machines a workpiece, the manipulator horizontal moving driving mechanism driving the manipulator horizontal moving driving mechanism to move to the end of the machine tool bed provided with the tool magazine to move the machine tool changer away from a machining area of the machine tool, and then the machine tool machining the workpiece;
when the machine tool spindle needs a tool change, the machine tool spindle stopping machining, the manipulator rotation driving mechanism driving the manipulator to rotate around the horizontal axis to grip a corresponding tool in the tool magazine, and then, the manipulator horizontal moving driving mechanism driving the machine tool changer to move on the guide rail used for horizontal movement of the machine tool spindle to move the manipulator horizontally to a position of the machine tool spindle;
specifically, when the machine tool spindle needs a tool change, the machine tool spindle stopping machining, the numerical control system adjusting the orientation of the machine tool spindle so that the tool on the machine tool spindle is parallel to the machine tool bed, the manipulator swinging driving mechanism driving the manipulator mounting arm to swing around the horizontal axis toward the tool magazine, then the manipulator rotation driving mechanism (second driving motor) driving the manipulator to rotate by 180°, allowing the manipulator to grip the corresponding tool in the tool magazine, the tool change between the manipulator and the tool magazine involving rotation of the manipulator and horizontal movement of the manipulator driven by the manipulator horizontal moving driving mechanism, the rotation of the manipulator being used for the manipulator to grip and release the tool, while the horizontal movement of the manipulator driven by the manipulator horizontal moving driving mechanism being used for the manipulator to pull the tool from the tool magazine or insert the tool into the magazine, and after the manipulator grips the tool, the manipulator swinging driving mechanism driving the manipulator mounting arm to swing around the horizontal axis away from the tool magazine to an initial position of the manipulator, the manipulator horizontal moving driving mechanism then driving the machine tool changer to move along the guide rail used for horizontal movement of the machine tool spindle, moving the manipulator horizontally to the position of the machine tool spindle, and at this moment, the manipulator and the machine tool spindle being aligned in the horizontal direction;
the manipulator swinging driving mechanism driving the manipulator mounting arm to swing around the horizontal axis toward the machine tool spindle to align the manipulator with the machine tool spindle;
specifically, after the manipulator moves horizontally to the position of the machine tool spindle, the manipulator swinging driving mechanism driving the manipulator mounting arm to swing around the horizontal axis toward the machine tool spindle, aligning the manipulator vertically with the machine tool spindle, the manipulator rotation driving mechanism then driving the manipulator to rotate, switching the tool on the manipulator with the tool on the machine tool spindle, the tool change between the manipulator and the machine tool spindle involving rotation of the manipulator and horizontal movement of the manipulator driven by the manipulator horizontal moving driving mechanism (direction indicated by arrow C-C in Fig. 5), and the rotation of the manipulator being used for the manipulator to grip and release the tool, while the horizontal movement of the manipulator driven by the manipulator horizontal moving driving mechanism being used for the manipulator to pull the tool from the machine tool spindle or insert the tool into the machine tool spindle; and
after switching the tool on the manipulator and the tool on the machine tool spindle, the manipulator swinging driving mechanism driving the manipulator mounting arm to swing around the horizontal axis away from the machine tool spindle, and the manipulator horizontal moving driving mechanism driving the machine tool changer to move to the end of the machine tool bed provided with the tool magazine to move the manipulator away from the machining area of the machine tool spindle;
specifically, after the tool change between the manipulator and the machine tool spindle, the manipulator swinging driving mechanism driving the manipulator mounting arm to swing around the horizontal axis away from the machine tool spindle, that is, moving the manipulator to a corresponding position vertically to prevent any movement interference between the manipulator and the machine tool or other components during horizontal movement of the manipulator, and the manipulator horizontal moving driving mechanism driving the machine tool changer to move to the end of the machine tool bed with the tool magazine, positioning the manipulator away from the machining area of the machine tool spindle, i.e., moving the manipulator to a reset position.

The above description is only a preferred embodiment of the present invention, but the protection scope of the present invention is not limited to this. Any equivalent replacements or changes made by a person skilled in the art within the technical scope disclosed by the present invention according to the technical solution of the present invention and the inventive concept thereof should be within the protection scope of the present invention.

## Claims

1. A machine tool changer, comprising:
a manipulator;
a manipulator mounting arm;
a manipulator mounting base;
a manipulator rotation driving mechanism;
a manipulator swinging driving mechanism; and
a manipulator horizontal moving driving mechanism, wherein
the manipulator is mounted on the manipulator mounting arm, which is mounted with the manipulator rotation driving mechanism for driving the manipulator to rotate around a horizontal axis, the manipulator mounting arm is mounted on the manipulator mounting base, which is mounted with a manipulator swinging driving mechanism for driving the manipulator mounting arm to swing around the horizontal axis, and the manipulator mounting base is mounted with the manipulator horizontal moving driving mechanism for driving the manipulator mounting base to move horizontally to make the manipulator approach or move away from a machine tool spindle.

2. The machine tool changer according to claim 1, wherein
the manipulator horizontal moving driving mechanism includes a guide rail slider, a rack, a gear, and a first driving motor; and
the guide rail slider is mounted on the manipulator mounting base and connected to a guide rail which is arranged on a machine tool bed, and the first driving motor is mounted on the manipulator mounting base and connected to the gear, which meshes with the rack arranged on the machine tool bed.

3. The machine tool changer according to claim 2, wherein
the manipulator mounting base includes a guide rail slider mounting portion, a first driving motor mounting portion, and a manipulator mounting arm installation portion; and
the guide rail slider is mounted on the guide rail slider mounting portion, the first driving motor is mounted on the first driving motor mounting portion, an upper portion of one end of the guide rail slider mounting portion is the manipulator mounting arm installation portion, and the manipulator mounting arm is hinged on the manipulator mounting arm installation portion.

4. The machine tool changer according to claim 1, wherein
the manipulator mounting arm is hinged on the manipulator mounting base, and the manipulator swinging driving mechanism is a linear driving device with one end hinged to the manipulator mounting arm or the manipulator mounting base and another end fixedly connected to the manipulator mounting base or the manipulator mounting arm.

5. The machine tool changer according to claim 1, wherein
the manipulator includes a main tool changing claw, a main clamping claw, and a main clamping claw driving mechanism, the main tool changing claw has a tool holder slot, the main clamping claw driving mechanism is arranged at a bayonet end of the tool holder slot on the main tool changing claw, and the main clamping claw is fixed on the main clamping claw driving mechanism, which can drive the main clamping claw to move toward the tool holder slot to clamp or release a tool holder in the tool holder slot.

6. The machine tool changer according to claim 1, wherein
the manipulator rotation driving mechanism is a second driving motor.

7. The machine tool changer according to claim 1, wherein
the manipulator mounting base is also mounted with a travel switch.

8. A machine tool, comprising:
a machine tool bed;
a machine tool spindle;
a tool magazine; and the machine tool changer according to any one of claims 1 to 7, wherein
the machine tool spindle is mounted on the machine tool bed, one end of the machine tool bed is provided with the tool magazine, the machine tool changer is mounted on the machine tool bed, and the manipulator horizontal moving driving mechanism can drive the machine tool changer to move horizontally on the machine tool bed to make the manipulator approach or move away from the machine tool spindle.

9. The machine tool according to claim 8, wherein
the guide rail connected to the guide rail slider of the manipulator horizontal moving driving mechanism is identical to the guide rail used for horizontal movement of the machine tool spindle.

10. A machine tool changing method of the machine tool according to claim 8 or claim 9, comprising:
when the machine tool spindle machines a workpiece, the manipulator horizontal moving driving mechanism driving the machine tool changer to move to the end of the machine tool bed provided with the tool magazine to move the machine tool changer away from a machining area of the machine tool;
when the machine tool spindle needs a tool change, the machine tool spindle stopping machining, the manipulator rotation driving mechanism driving the manipulator to rotate around the horizontal axis to grip a corresponding tool in the tool magazine, and then, the manipulator horizontal moving driving mechanism driving the machine tool changer to move on the guide rail used for horizontal movement of the machine tool spindle to move the manipulator horizontally to a position of the machine tool spindle;
the manipulator swinging driving mechanism driving the manipulator mounting arm to swing around the horizontal axis toward the machine tool spindle to align the manipulator with the machine tool spindle;
the manipulator rotation driving mechanism driving the manipulator to rotate around the horizontal axis to switch a tool on the manipulator and a tool on the machine tool spindle; and
after switching the tool on the manipulator and the tool on the machine tool spindle, the manipulator swinging driving mechanism driving the manipulator mounting arm to swing around the horizontal axis away from the machine tool spindle, and the manipulator horizontal moving driving mechanism driving the machine tool changer to move to the end of the machine tool bed provided with the tool magazine to move the manipulator away from the machining area of the machine tool spindle.
